(19) Europäisches Patentamt
European Patent Office
Office européen des brevets

(11) **EP 1 643 707 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(51) Int Cl.:
***H04L 27/26*** *(2006.01)*

(21) Anmeldenummer: **05107360.9**

(22) Anmeldetag: **10.08.2005**

(54) **Verfahren zum Synchronisieren eines Abtasttaktes sowie Synchronisationseinheit für ein Mehrträgerempfangssystem**

Method for synchronisation of a sampling clock and synchronisation unit for a multi-carrier receiver system

Méthode pour la synchronisation d'une horloge d'échantillonnage et ensemble de synchronisation pour un système récepteur multiporteuse

(84) Benannte Vertragsstaaten:
**DE FR GB IT SE**

(30) Priorität: **30.09.2004 DE 102004047600**

(43) Veröffentlichungstag der Anmeldung:
**05.04.2006 Patentblatt 2006/14**

(73) Patentinhaber: **ROBERT BOSCH GMBH**
**70442 Stuttgart (DE)**

(72) Erfinder:
• **Schaefer, Wolfgang**
**31141 Hildesheim (DE)**
• **Hansen, Christian**
**13587 Berlin (DE)**

(56) Entgegenhaltungen:
EP-A- 1 335 552          WO-A-98/19410
GB-A- 2 376 855          US-B1- 6 577 690

• KELLER T ET AL: "ORTHOGONAL FREQUENCY DIVISION MULTIPLEX SYNCHRONISATION TECHNIQUES FOR WIRELESS LOCAL AREA NETWORKS" IEEE INTERNATIONAL SYMPOSIUM ON PERSONAL, INDOOR AND MOBILE RADIO COMMUNICATIONS, Bd. 3, 15. Oktober 1996 (1996-10-15), Seiten 963-967, XP002063294
• HOFMANN F ET AL: "Digital Radio Mondiale (DRM) Digital Sound Broadcasting in the AM Bands" IEEE TRANSACTIONS ON BROADCASTING, IEEE INC. NEW YORK, US, Bd. 49, Nr. 3, 3. September 2003 (2003-09-03), Seiten 319-328, XP002319507 ISSN: 0018-9316

**Beschreibung**

Die Erfindung betrifft ein Verfahren zum Bestimmen eines Abweichungswertes, um einen Abtasttakt in einem Mehrträgerempfangssystem mit verteilten Pilotträgern zu synchronisieren. Die Erfindung betrifft weiterhin eine Synchronisationseinheit für ein Mehrträgerempfangssystem zum Synchronisieren eines Abtasttaktes mithilfe eines Abweichungswertes.

Bei einem neuen digitalen Rundfunkübertragungsstandard, DRM (Digital Radio Mondiale) gemäß ETSI Spec. ES 201980 wird ein digitales zeitlich gemultiplextes Signal bei einer Trägerfrequenz unter 30 MHz verwendet, um Rundfunksignale zu übertragen. Als Modulationsverfahren wird dabei das Mehrträgerverfahren OFDM benutzt.

Zu Kodierung bzw. Dekodierung der OFDM-Signale müssen diese mit einer bestimmten Frequenz abgetastet werden. Diese Abtastfrequenz in einem Empfangsgerät muss dabei möglichst der Frequenz entsprechen, die in einem D/A-Wandler zur Kodierung in dem Sendegerät bereitgestellt wird. Während in dem Sendegerät sehr genaue Oszillatoren hierfür vorgesehen werden können, ist die Genauigkeit bei der Generierung des Abtasttaktes in den Empfangsgeräten beschränkt, da dort üblicherweise eine kostengünstigere und einfachere Technologie verwendet wird. Bei der Dekodierung des OFDM-Signals kommt es daher zu Abtasttaktfehlern, die zu Fehlern beim Auswerten des Empfangssignals führen können. Um den Abtasttaktfehler auszugleichen, muss der Abtasttaktfehler geschätzt werden, so dass in regelmäßigen Abständen der Abtasttakt korrigiert werden kann.

Bekannte Verfahren zur Schätzung des Abtasttaktfehlers bei der OFDM-Signalübertragung verwenden im Empfangssignal vorhandene kontinuierliche Piloten aus, um die Abtasttaktungenauigkeit des Empfangsgerätes zu detektieren. Dabei wird zur Bestimmung der Abtasttaktungenauigkeit die Phasendifferenz von mindestens zwei zeitlich aufeinanderfolgenden Pilotpaaren bestimmt. Diese Phasendifferenz ist proportional zur Abtasttaktungenauigkeit. Bei einem solchen Verfahren ist es jedoch von Nachteil, dass das Einfügen von kontinuierlichen Piloten in das Sendesignal immer einen Verlust an Datenrate bedeutet. Zur Ermittlung eines genauen Schätzwertes für den Abtasttaktfehler ist oftmals eine große Anzahl von kontinuierlichen Piloten notwendig. Der Übertragungsstandard DRM ist das erste standardisierte kohärente Übertragungssystem, in dem keine große Anzahl von kontinuierlichen Piloten zu Abstimmungszwecken zur Verfügung steht.

Insbesondere bei dem neuen Rundfunkübertragungsstandard DRM stehen nur drei kontinuierliche Piloten zur Verfügung. Die Ermittlung der Abtasttaktungenauigkeit ist demzufolge nach dem oben genannten Prinzip relativ ungenau und erfordert eine lange Akquisitionszeit.

Weiterhin ist für eine korrekte Demodulation von Nutzdaten in einem kohärenten OFDM-Signalübertragungssystem eine Schätzung der aktuellen Kanalübertragungsfunktion des Übertragungskanals notwendig. Dies wird durch das Einfügen einer Vielzahl von in Zeit- und Frequenzrichtung verteilten Pilotsubträgern ermöglicht.

Aus der US 6,577,690 B1 ist ein Verfahren und eine Vorrichtung zur Bestimmung eines Abtasttaktfehlers zwischen einem Sender und einem Empfänger bekannt, wobei hierzu Pilotsignale verwendet werden, sowie statistische Prozesse des Rauschens verwendet werden. Der Schätzwert wird berechnet, sodass die Restabweichung des Abtastwertes unterhalb der kleinsten Zelleinheit des spannungsgesteuerten Oszillators bleibt, der den Empfängertakt steuert. Hierzu werden Frequenzabschnittsequalizer verwendet, die verschiedene Unterträger erfassen und die die Trift dieser Abschnitte über eine gewisse Zeit verfolgen und mittels statistischer Analysen den Abtasttakt korrigieren.

Aus der WO 98/19410 ist ein Empfänger für elektromagnetische Signale mit Verwendung einer Vielfachträgermodulation bekannt, wobei die Synchronisation einen Zeitintervall betrifft, der für die Berechnung einer schnellen Fourier-Transformation in einem Empfänger erforderlich ist, welcher das orthogonale Frequenz-Multiplexverfahren verwendet. Hierzu wird die Taktsynchronisation für die Demodulierung eines Signals, welches einen Strom von Datensymbolen mit einem Symbolzeitintervall enthält, durchgeführt, wobei die Symbole ein aktives Intervall und ein Schutzintervall aufweisen, wobei das Schutzintervall entweder eine Wiederholung oder eine zyklische Erweiterung des Abschnitts des aktiven Intervalls ist und wobei das Verfahren den Strom in einem Abtastintervall abtastet, die Abtastwerte zu einer Mehrzahl an Paaren verbunden werden, wobei jedes dieser Paare ein erstes Teil und ein zweites Teil aufweisen, wobei jedes erste Teil durch das aktive Intervall im Strom vom zweiten Teil getrennt ist und die ersten Teile und zweiten Teile jeweils in einem ersten und einem zweiten Block liegen und der erste Block und der zweite Block nicht größer als das Schutzintervall sind und eine Funktion des ersten und des zweiten Teils jedes Paars bestimmt wird, woraus die Grenzen des Schutzintervalls und des aktiven Intervalls bestimmt werden.

Es ist Aufgabe der vorliegenden Erfindung ein Verfahren zum Bestimmen eines Abweichungswertes eines Abtasttaktes aus einem zeitlichen gemultiplexten Empfangssignal bereitzustellen. Es ist weiterhin Aufgabe der vorliegenden Erfindung eine Synchronisationseinheit für ein Mehrträgerempfangssystem bereitzustellen, in dem ein Abtasttakt synchronisiert werden kann.

Diese Aufgabe wird durch das Verfahren nach Anspruch 1 sowie durch die Synchronisationseinheit nach Anspruch 6 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Bestimmen eines Abweichungswertes eines Abtasttaktes aus einem zeitlich gemultiplexten Empfangssignal vorgesehen, um einen Abtasttakt in einem Mehrträgerempfangssystem mit verteilten Pilotträgern zu synchronisieren. Das Verfahren umfasst die Schritte des nacheinander Empfangens von OFDM-Symbolen in dem Empfangssignals, des Durchführens einer Schätzung der Kanalübertragungsfunktion für das aktuelle empfangene OFDM-Symbol mithilfe der verteilten Pilotträger, des konjugiert komplexen Multiplizieren der geschätzten Kanalübertragungsfunktionen von zwei nacheinander empfangenen OFDM-Symbolen, um ein Phasendifferenzsignal Z zu erhalten, des Bestimmens eines ersten Phasenwertes aus dem Phasendifferenzsignal Z durch Mittelung über eine oder mehrere Frequenzen einer ersten Frequenzgruppe, des Bestimmens eines zweiten Phasenwertes aus dem Phasendifferenzsignal Z durch Mittelung über einer oder mehrere Frequenzen einer zweiten Frequenzgruppe und des Ermittelns des Abweichungswerts aus dem ersten und zweiten Phasenwert.

Das Verfahren zum Bestimmen des Abweichungswertes eines Abtasttaktes bei zeitlich gemultiplexten Empfangssignalen, wie z. B. OFDM-Signalen, hat den Vorteil, dass durch das Durchführen der ohnehin in einem kohärenten OFDM-Empfänger vorhandenen Schätzung der Kanalübertragungsfunktion der Abweichungswert sehr exakt ermittelt werden kann, während bei bekannten Verfahren zur Schätzung des Abweichungswertes eine Mittelung über viele OFDM-Symbole durchgeführt werden muss. Des weiteren ist das Verfahren zur Schätzung der Abweichung des Abtasttaktes bei OFDM-Signalen sehr robust gegenüber Rauschstörungen. Ein deutlicher Vorteil des erfindungsgemäßen Verfahrens besteht weiterhin darin, dass sich auch in stark Frequenz selektiven Übertragungskanälen der Abweichungswert mit hoher Genauigkeit ermitteln lässt, während bei den bekannten Verfahren eine korrekte Ermittlung des Abweichungswert unter Umständen nicht möglich ist, weil die kontinuierlichen Piloten z. B. durch frequenzselektiven Schwund gestört sind. Des weiteren ist von Vorteil, dass bei dem erfindungsgemäßen Verfahren keine zusätzlichen Piloten zur Ermittlung des Abweichungswerts in das Empfangssignal eingefügt werden müssen und somit das Verfahren auch bei dem DRM-Übertragungsstandard verwendet werden kann.

Beim Auswerten und Demodulieren von kohärenten OFDM-Empfangssignalen wird üblicherweise eine Schätzung der Kanalübertragungsfunktion, eine sog. Kanalschätzung vorgenommen, die aus den in Zeit- und Frequenzrichtungen verteilten Pilotsymbolen durch Interpolation gewonnen wird. Die Kanalschätzung dient dazu, Störungen auf der Übertragungsstrecke zu erkennen und die empfangenen OFDM-Symbole entsprechend der erkannten Störungseinflüsse in Amplitude und Phase so anzupassen, dass diese in korrekter Weise ausgewertet werden können. Für eine verlässliche Kanalschätzung ist es nicht nötig, auf jedem Subträger ein Pilotsymbol zu senden, da sich der Übertragungskanal nur mit einer endlichen Geschwindigkeit ändert, so dass eine Kanalschätzung für die zwischen zwei Piloten liegenden Subträger mithilfe einer Interpolation durchgeführt werden kann. Das erfindungsgemäße Verfahren macht sich nun dies zu nutzen, dass die Kanalschätzungen für jedes OFDM-Symbol von der Kanalschätzeinheit aktualisiert wird.

Es ist gemäß einer weiteren Ausführungsform möglich, dass die ermittelten Abweichungswerte zeitlich gemittelt werden, um die Genauigkeit der Schätzung des Abtastfehlers zu erhöhen.

Gemäß einer Ausführungsform der Erfindung kann bei Abtastabweichungen über eine bestimmte Schwelle eine Grobsynchronisation mithilfe eines geschätzten Abweichungswertes durchgeführt werden. Die Schätzung des Abweichungswertes für die Grobsynchronisation wird durchgeführt, indem Schwerpunkte von Kanalstoßantworten zu zwei verschiedenen Zeitpunkten ermittelt werden, wobei aus der zeitlichen Änderung der Schwerpunkte der Kanalstoßantworten ein Schätzwert für den Abweichungswert gewonnen wird. Insbesondere kann das Ermitteln des Schwerpunktes der Kanalstoßantwort durch Berechnung einer Guard-Intervall-Korrelation durchgeführt werden.

Gemäß einem weiteren Aspekt der vorliegenden Erfindung ist eine Synchronisationseinheit für ein Mehrträgerempfangssystem zum Synchronisieren eines Abtasttaktes mithilfe eines Abweichungswertes vorgesehen. Die Synchronisationseinheit umfasst eine Kanalschätzeinheit zum Durchführen einer Kanalschätzung für das aktuell empfangene OFDM-Symbol, eine Phasendifferenzsignaleinheit zum Ermitteln eines Phasendifferenzsignals Z, eine Integrationseinheit zum Bestimmen eines ersten Phasenwertes aus dem Phasendifferenzsignal Z durch Mittelung über eine oder mehrere Frequenzen einer ersten Frequenzgruppe und zum Bestimmen eines zweiten Phasenwertes aus dem Phasendifferenzsignal Z durch Mittelung über eine oder mehrere Frequenzen einer zweiten Frequenzgruppe, eine Schätzeinheit zum Ermitteln des Abweichungswertes aus dem ersten und zweiten Phasenwert, sowie eine Abtastkorrektureinheit zum Einstellen des Abtasttaktes abhängig von dem Abweichungswert (Schätzfehler).

Die erfindungsgemäße Synchronisationseinheit hat den Vorteil, dass die Kanalschätzeinheit, die ohnehin Bestandteil jeder kohärenten OFDM-Empfangseinrichtung ist, zusätzlich für das Bestimmen des Abweichungswertes verwendet wird. Die erfindungsgemäße Synchronisationseinheit ermöglicht es weiterhin, dass in das Empfangssignal keine weiteren Piloten zur Ermittlung des Abweichungswertes zur Korrektur des Abtasttaktes eingefügt werden müssen.

Gemäß einer weiteren Ausführungsform der Erfindung umfasst die Synchronisationseinheit eine Grobsynchronisationseinrichtung, um eine Grobsynchronisation bei Abweichungen des Abtasttaktes über einer bestimmten Schwellenabweichung mithilfe eines geschätzten Abweichungswertes durchzuführen. Die Grobsynchronisationseinrichtung ist ausgestaltet, um die Schätzung des Abweichungswerts für die Grobsynchronisation durchzuführen, indem die Schwerpunkte von Kanalstoßantworten zu zwei verschiedenen Zeitpunkten ermittelt werden, wobei aus den Schwerpunkten der Kanalstoßantworten ein Schätzwert für den Abweichungswert gewonnen wird.

Bevorzugte Ausführungsformen der Erfindung werden nachfolgend anhand der beigefügten Zeichnungen näher erläutert. Es zeigen:

Figur 1 ein Blockdiagramm einer erfindungsgemäßen Synchronisationseinheit;
Figur 2 eine exemplarische Pilotenanordnung in einer Folge von Symbolen zur Ermittlung einer Kanalschätzung;
Figur 3 eine Darstellung der Phase des Phasendifferenzsignals Z; und
Figur 4 eine Darstellung der Qualität der Ermittlung des abweichungswertes bei einer Mittelung über der Zeit.

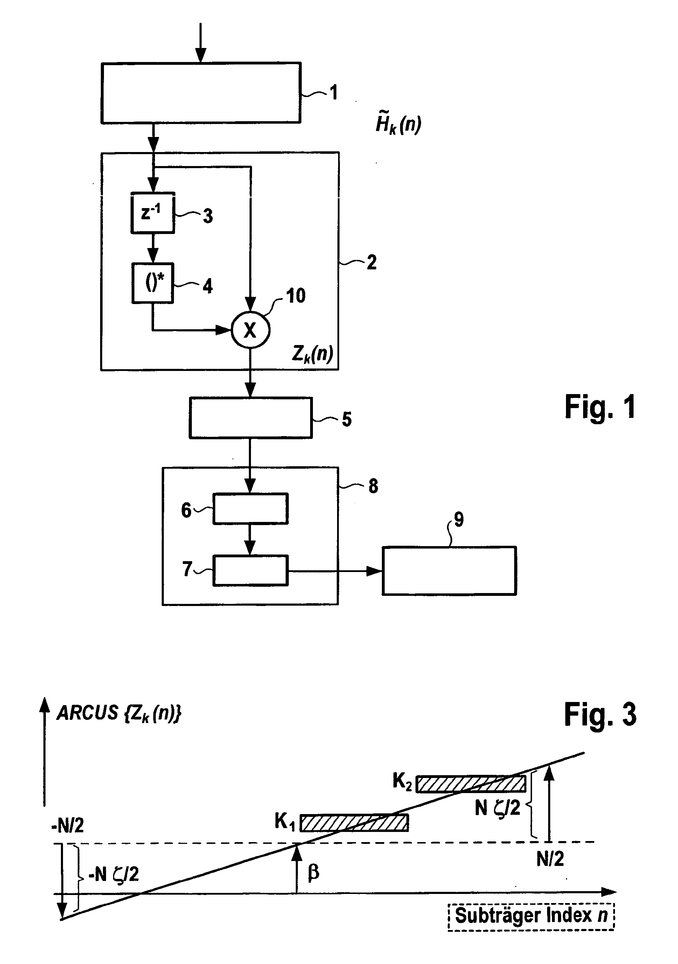

In der Figur 1 ist ein Blockdiagramm einer erfindungsgemäßen Synchronisationseinheit für ein OFDM-Empfangsgerät dargestellt. Die Synchronisationseinheit umfasst eine Kanalschätzeinheit 1, der komplexe Subträgersymbole eines OFDM-Symbols zugeführt werden. Aus den in den komplexen Subträgersymbolen des OFDM-Empfangssignals verteilten Pilotsymbolen für jede Subträgerfrequenz n für jedes nacheinander empfangene OFDM-Symbol k wird darin eine Kanalschätzung $H_k(n)$ berechnet, wobei $H_k$ die geschätzte Kanalübertragungsfunktion, n die Subträgerfrequenz und k die Indexnummer des OFDM-Symbols darstellt. Die Kanalschätzeinheit 1 ist üblicherweise Bestandteil jedes kohärenten OFDM-Empfangsgerätes. Eine Kanalschätzung wird bei OFDM-Empfangssystem häufig aus den in Zeit- und Frequenzrichtungen verteilten Pilotsymbolen durch Interpolation gewonnen.

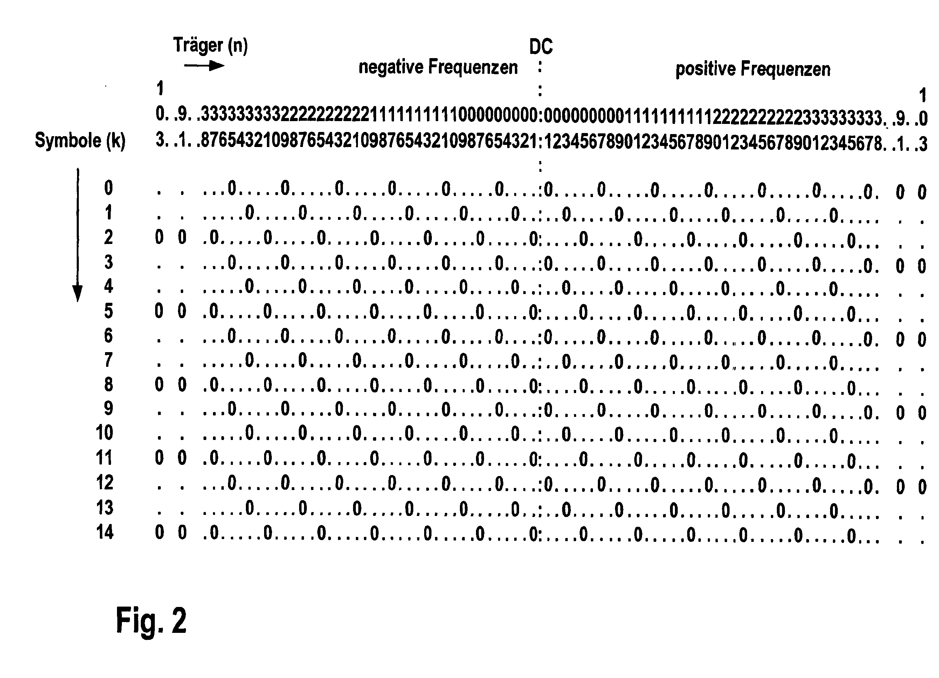

Die Figur 2 zeigt eine exemplarische Pilotanordnung zur Ermittlung einer Kanalschätzung. Die Position der Pilotsymbole in Zeit- und Frequenzrichtung ist dabei mit einem O gekennzeichnet. Ein Datensubträger ist mit einem Punkt dargestellt. Im Allgemeinen ist es hinsichtlich einer verlässlichen Kanalschätzung nicht nötig auf jedem Subträger ein Pilotsymbol zu senden, da sich der Übertragungskanal nur mit einer endlichen Geschwindigkeit ändert, so dass eine Kanalschätzung für die zwischen zwei Piloten liegenden Subträger mittels Interpolation ausreichend ist.

Die durch die Kanalschätzeinheit 1 geschätzte Kanalübertragungsfunktion $H_k(n)$ wird einer Phasendifferenzberechnungseinheit 2 zur Ermittlung eines Phasendifferenzsignals Z zugeführt. Die Phasendifferenzeinheit berechnet das Phasendifferenzsignal Z durch Ermitteln des konjugiert komplexen Produktes zweier aufeinander folgenden geschätzten Kanalübertragungsfunktionen. Es gilt:

$$Z_k(n) := \tilde{H}_k(n) \cdot \tilde{H}^{*}_{k-1}(n) \; .$$

Die Phasendifferenzeinheit 2 enthält zur Berechnung des konjugiert komplexen Produktes eine Verzögerungseinheit 3 und einen Phasenschieber 4, um einen konjugiert komplexen Kanalschätzwert zu ermitteln. Anschließend wird der konjugiert komplexe vorherige Kanalschätzwert mit dem aktuellen Kanalschätzwert in einem Multiplikator 10 multipliziert und das Ergebnis als Phasendifferenzsignal Z bereitgestellt.

Unter der Annahme, dass der Übertragungskanal sich zwischen zwei aufeinanderfolgenden OFDM-Symbolen nur unwesentlich ändert, und eine hinreichend gute Kanalschätzung für das k-te bzw. das k-1-te OFDM-Symbol vorliegt, lässt sich zeigen, dass die Phase des Phasendifferenzsignals Z proportional zur Abtastungenauigkeit $\zeta$ ist. Es gilt:

$$Z_k(n) := \left| \tilde{H}_k(n) \right|^2 e^{j\frac{2\pi}{N}(N_G + N)\zeta n} e^{j\beta} \; ,$$

wobei die Abtastungenauigkeit $\zeta$ als

$$\zeta = 1 - \frac{T_s}{T_I}$$

gegeben ist. $T_s$ entspricht dem realen Abtasttakt und $T_I$ dem idealen Abtasttakt.

In der obigen Gleichung kennzeichnet $N_G$ die Guard-Intervalllänge in Abtastwerten, N beschreibt die DFT-Länge (DFT: Discrete Fourier Transformation). Der Term $\beta$ kennzeichnet eine zusätzliche Phasenrotation, die durch einen Frequenzversatz hervorgerufen wird. Da der Kanalschätzeinheit 1 üblicherweise eine Frequenzsynchronisationseinheit vorgeschaltet ist, kann im allgemeinen davon ausgegangen werden, dass der Phasenwinkel $\beta$ sehr klein ist und im weiteren vernachlässigbar ist.

In Figur 3 ist die Phase des Phasendifferenzsignals Z graphisch dargestellt. Man erkennt, dass eine Abtasttaktungenauigkeit $\zeta$ eine zum Subträgerindex n proportionale Phasenrotation im Phasendifferenzsignal Z verursacht. Die Steigung der Phasengeraden der Abbildung 3 entspricht dabei in proportionaler Weise der Abtasttaktungenauigkeit $\zeta$. Das Phasendifferenzsignal Z wird nun einem Integrator 5 zugeführt, um einen ersten Phasenwert aus dem Phasendifferenzsignal Z durch Mittelung über eine oder mehrere Frequenzen einer ersten Frequenzgruppe K1 und einen zweiten Phasenwert aus dem Phasendifferenzsignal Z durch Mittelung über einer oder mehrere Frequenzen einer zweiten Frequenzgruppe K2 zu bestimmen. Das Verfahren zur Schätzung der Abtastungenauigkeit schätzt die Steigung der Phasengeraden durch Berechnung mehrerer mittlerer Phasen innerhalb einer Gruppe von K Subträgern und anschließender Phasendifferenzbildung zwischen den mittleren Phasen der Frequenzgruppen. Der Integrator 5 nimmt selbstverständlich keine Mittelung vor, wenn die Frequenzgruppe nur eine Frequenz aufweist. In diesem Fall kann der Integrator auch weggelassen werden, da er den Phasendifferenzwert Z unverändert weitergibt.

Eine Frequenzgruppenbildung ist jedoch für eine genauere Phasenbestimmung von Vorteil, da durch die Gruppenbildung eine hohe Robustheit gegenüber Rauschstörungen und gegenüber frequenzselektiven Einflüssen des Übertragungskanals erreicht wird. Der Indexbereich einer Gruppe kann dabei beliebig innerhalb der Nutzbandbreite variiert werden. Es ist lediglich darauf zu achten, dass die Phase des Phasendifferenzsignals Z innerhalb einer Frequenzgruppe keinen $2\pi$ Phasensprung aufweist. Figur 3 zeigt exemplarisch die Frequenzgruppen $K_1$ und $K_2$ als schraffierte Bereiche.

Ein Abweichungswert kann mithilfe nachfolgender Gleichung und durch Berechnung von zwei gemittelten Phasen innerhalb der Bereiche $K_1$ und $K_2$ gefunden werden.

$$\tilde{\zeta}(k) = \frac{N}{2\pi(N_G + N)}\left(\varphi_2(k) - \varphi_1(k)\right)\frac{1}{G}$$

mit

$$\varphi_{1/2}(k) = arcus\left\{\sum_{n \in K_{1/2}} Z_k(n)\right\},$$

wobei G den Abstand der Trägergruppen und $\varphi_{1/2}(k)$ der Phasenwinkel des jeweiligen aktuellen Phasendifferenzsignals darstellt. Dies wird in einer Schätzereinheit 8, die eine Phasenberechnungseinheit 6 und eine Phasendifferenzbildner 7 aufweist, durchgeführt.

Der so ermittelte Abweichungswert wird anschließend einer Abtasttaktkorrektureinheit 9 zum Nachregeln des Abtasttaktes zugeführt.

Alternativ ist es möglich mehrere kleinere Frequenzgruppen zu bilden und das Ergebnis zu mitteln. Ein solches Vorgehen kann bei größeren Abweichungswerten sinnvoll sein.

Werden zur Bestimmung des Abweichungswertes nicht alle Werte der geschätzten Kanalübertragungsfunktion $\tilde{H}_k(n)$ ausgewertet, so lässt sich der Rechenaufwand bei der Implementierung des Verfahrens zur Abtastsynchronisation reduzieren. Dadurch wird jedoch die Standardabweichung der Abtasttaktungenauigkeit erhöht. Die Qualität der geschätzten Abtasttaktungenauigkeit lässt sich durch zusätzliche Mittelungen der

geschätzten Abtasttaktungenauigkeiten $\tilde{\zeta}(k)$ über der Zeit verbessern. Eine solche Mittelung lässt sich beispielsweise durch Berechnung eines gleitenden Mittelwertes realisieren:

$$\bar{\zeta}(k) = \frac{1}{M}\sum_{i=0}^{M-1}\tilde{\zeta}(k-i);$$

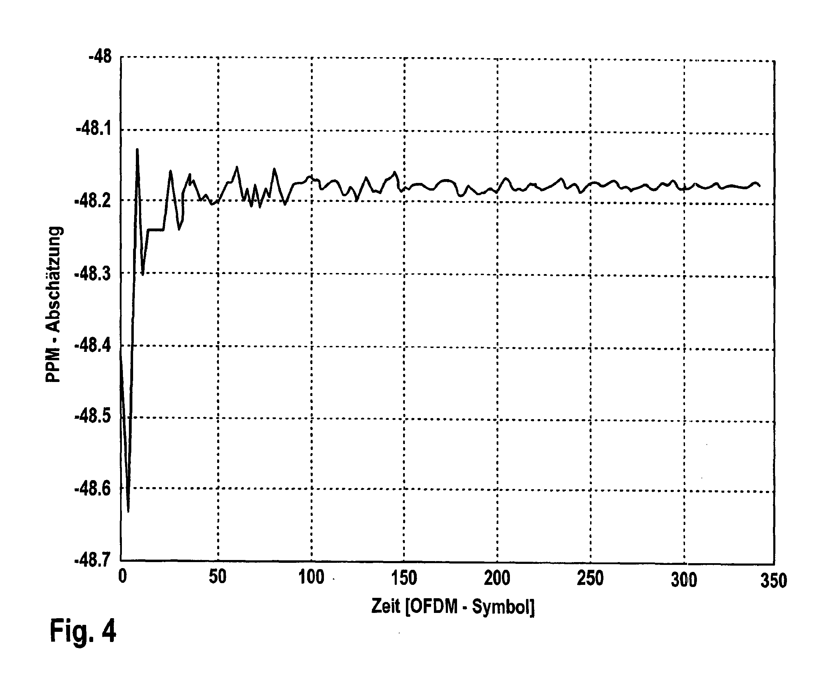

wobei M die Anzahl der gemittelten Abweichungswerte angibt. In Figur 4 ist das Ergebnis einer solchen Mittelung gezeigt. Man erkennt, dass die Schätzung des Abweichungswertes mit zunehmender Anzahl der für die Mittelungen verwendeten geschätzten Abweichungswerte zunimmt.

Figur 4 zeigt den mithilfe des Verfahrens zur Abtasttaktsynchronisation den nach der obigen Gleichung ermittelten Schätzwert bei Übertragung über einen stark frequenzselektiven Kanal. Die Abtasttaktungenauigkeit des Empfangsgeräts beträgt in Figur 4 beispielsweise -48 PPM. Man erkennt, dass selbst ohne zusätzliche Mittelungen (M=1) schon ein sehr guter Schätzwert für die Abtasttaktungenauigkeit erreicht wird. Die Abtasttaktungenauigkeit kann durch das vorgeschlagene Verfahren zur Abtasttaktschätzung sehr genau ermittelt werden.

Ist die Abtasttaktungenauigkeit bekannt, so kann das Empfangssignal dann mithilfe dieses Schätzwerts korrigiert werden. Zur Korrektur ist es denkbar, den Quarz eines ebenfalls in dem OFDM-Empfangsgerät vorhanden A/D-Wandlers (nicht gezeigt) der den Takt des Wandlers liefert, direkt zu regeln. Aus Kostengründen werden allerdings häufig freilaufende Oszillatoren verwendet. In diesem Fall muss das Empfangssignal mittels digitaler Interpolation korrigiert werden. Der mit dem Verfahren zur Schätzung der Abtasttaktungenauigkeit ermittelte Abweichungswert wird in diesem Fall zur Ansteuerung eines Interpolationsfilters benutzt.

Die Leistungsfähigkeit des Verfahrens zur Abtasttaktsynchronisation ist von der Leistungsfähigkeit der jeweiligen Kanalschätzeinheit 1 abhängig. Ist unter bestimmten Empfangsbedingungen keine korrekte Kanalschätzung möglich, so kommt es zwangsläufig zu Fehlern bei der Schätzung des Abweichungswertes. Besonders bei sehr großen Taktabweichungen können die Störungen des Empfangsgeräts beträchtlich sein. In diesem Fall sollte zunächst eine grobe Schätzung des Abtasttaktes vorgenommen werden, indem die durch eine Abtasttaktungenauigkeit hervorgerufene Drift, also das Auseinanderlaufen von Empfangs- und Sendesignal, detektiert werden. Eine solche grobe Schätzung durch Driftdetektion kann vorteilhaft durch Auswertung der Schwerpunkte der Guard-Intervall-Korrelation zu einem Zeitpunkt T1 und einem Zeitpunkt T2 geschehen. Es ist bekannt, dass der Schwerpunkt der Guard-Intervall-Korrelation dem Schwerpunkt der jeweiligen Kanalstoßantwort entspricht.

Die Guard-Intervall-Korrelation kann beispielsweise nach folgender Formel berechnet werden:

$$\Lambda(k) = \sum_{i=0}^{N_Q-1} r(i + k + N) \cdot r^*(i + k) \;,$$

wobei r(k) das zu einem Zeitpunkt $kT_s$ abgetaktete Empfangssignal, N die DFT-Länge, $N_G$ die Länge des Guard-Intervalls in Abtastwerten sind.

Der Schwerpunkt der Kanalstoßantwort verschiebt sich proportional zum Abweichungswert. Liegt der Schwerpunkt der Kanalstoßantwort beispielsweise zum Zeitpunkt k=t1 bei SP1 und zum Zeitpunkt k=t2 bei SP2, so lässt sich daraus ein grober Schätzwert für den Abweichungswert wie folgt ableiten:

$$\bar{z} = \frac{SP2 - SP1}{t2 - t1} \frac{1}{N + N_G} 10^6 \;.$$

Der so ermittelte Abweichungswert kann dann als Startpunkt für die digitale Interpolation benutzt werden. Ist eine korrekte Kanalschätzung verfügbar, wie es überlicherweise in der Trackingphase des Empfangsgeräts der Fall ist, so kann der Abweichungswert mithilfe von o. a. Gleichung weiter verbessert werden.

Bezugszeichenliste

1    Kanalschätzeinheit
2    Phasendifferenzsignaleinheit
3    Verzögerungselement
4    Phasenschieber
5    Integrator
6    Phasenberechnungseinheit
7    Phasendifferenzbildner
8    Schätzereinheit
9    Abtasttaktkorrektureinheit
10   Multiplizierer

**Patentansprüche**

**1.** Verfahren zum Bestimmen eines Abweichungswertes eines Abtasttaktes aus einem zeitlich gemultiplexten Empfangssignal um einen Abtasttakt in einem Mehrträger-Empfangssystem mit verteilten Pilotträgern zu synchronisieren, mit folgenden Schritten.

- Nacheinander Empfangen von OFDM, Orthogonal Frequency Division Multiplex; Symbolen;
- Durchführen einer Schätzung der Kanalübertragungsfunktion für das aktuell empfangene OFDM-Symbol mit Hilfe der verteilten Pilotträger,
- Konjugiert komplexes Multiplizieren der Kanalschätzungen von zwei nacheinander empfangenen OFDM-Symbolen, um ein Phasendifferenzsignal Z zu erhalten,
- Bestimmen eines ersten Phasenwertes aus dem Phasendifferenzsignal Z durch Mittelung über eine oder mehrere Frequenzen einer ersten Frequenzgruppe,
- Bestimmen eines zweiten Phasenwertes aus dem Phasendifferenzsignal Z durch Mittelung über eine oder mehrere Frequenzen einer zweiten Frequenzgruppe,
- Ermitteln eines Abweichungswertes aus dem ersten und zweiten Phasenwert wobei der Abweichungswert der Differenzwert aus dem ersten und zweiten Phasenwert ist

**dadurch gekennzeichnet, dass** eine Grobsynchronisation bei

Abtasttakrabweichungen über einer bestimmten Schwellenabweichung mit Hilfe eines geschätzten Abweichungswertes durchgeführt wird, indem Schwerpunkte von Guard-Intervall-Korreladonen zu zwei verschiedenen Zeitpunkten ermittelt werden, wobei aus der zeitlichen Änderung der Schwerpunkte der Guard-Intervall-Korrelationen ein Schätzwert für den Abweichungswert gewonnene wirt.

**2.** Verfahren nach Anspruch 1, wobei die Abweichungswerte zeitlich gemittelt werden, um den ermittelten Abweichungswert zu erhalten.

**3.** Synchronisationseinheit für ein Mehrträger-Empfangssystem mit verteilten Pilotträgern zum Synchronisieren eines Abtasttaktes mit Hilfe eines Abweichungswerts, umfassend:

- eine Kanalschätzeinheit (1) zum Durchführen einer Kanalschätzung für das aktuell empfangene OFDM, Orthogonal Frequency Division Multiplex; Symbol,
- eine Phasendifferenzsignaleinheit (2) zum ermitteln eines Phasendifferenzsignals Z,
- eine Integrationseinheit (5) zum Bestimmen eines ersten Phasenwertes aus dem Phasendifferenzsignal Z durch Mittelung über eine oder mehrere Frequenzen einer ersten Frequenzgruppe und zum Bestimmen eines zweiten Phasenwertes aus dem Phasendifferenzsignal Z durch Mittelung über eine oder mehrere Frequenzen einer zweiten Frequenzgruppe,
- eine Schätzereinheit (8), bestehend aus einer Phasenberechnungseinheit (6) sowie einem Phasendifferenzbildner (7) zum Ermitteln des Abweichungswertes aus der Differenz des ersten und zweiten Phasenwerts;
- eine Abtasttaktkorrektureinheit (9) zum Einstellen des Abtasttaktes abhängig von dem Abweichungswert,

**dadurch gekennzeichnet, dass** eine Grobsynchronisationseinnchtung vorgesehen ist; um eine Grobsynchronisation bei Abtasttaktabweichungen über einer bestimmten Schwellenabweichung mit Hilfe eines geschätzten Abweichungswertes durchzuführen, wobei die Grobsynchronisationseinrichtung so gestaltet ist, dass die Schätzung des Abweichungswertes für die Grobsynchronisätion durchgeführt wird, indem die Schwerpunkte von Guard-Intervall-Korrelationen zu zwei verschiedenen Zeitpunkten ermittelt werden, wobei aus den Schwerpunkten der Guard-Intervall-Korrelationen ein Schätzwert für den Abweichungswert gewonnen wird.

4. Synchronisationseinheit nach Anspruch 3, wobei die Phasendifferenzsignaleinheit (2) so gestaltet ist, dass die Kanalschätzungen von zwei nacheinander empfangenen OFDM-Symbolen konjugiert komplex multipliziert werden.

5. Synchronisationseinheit nach Anspruch 3 oder 4, wobei die Schätzereinheit (8) so gestaltet ist, dass als Abweichungswert ein Differenzwert aus dem ersten und zweiten Phasenwert bestimmt wird.

6. Synchronisationseinheit nach einem der Ansprüche 3 bis 5, wobei die Schätzereinheit (8) so gestaltet ist, dass die ermittelten Abweichungswerte zeitlich gemittelt werden, um den ermittelten Abweichungswert zu erhalten.

**Claims**

1. Method for determining a deviation value for a sampling clock from a time-division multiplexed received signal in order to synchronize a sampling clock in a multicarrier reception system with distributed pilot carriers, having the following steps:

   - OFDM, Orthogonal Frequency-Division Multiplex, symbols are received in succession;
   - the channel transfer function for the currently received OFDM symbol is estimated using the distributed pilot carriers,
   - the channel estimates of two successively received OFDM symbols are subjected to complex-conjugate multiplication in order to obtain a phase difference signal Z,

   - a first phase value is determined from the phase difference signal Z by averaging over one or more frequencies in a first frequency group,
   - a second phase value is determined from the phase difference signal Z by averaging over one or more frequencies in a second frequency group,
   - a deviation value is ascertained from the first and second phase values, wherein the deviation value is the difference value from the first and second phase values,

   **characterized in that** rough synchronization is performed for sampling clock deviations above a particular threshold deviation using an estimated deviation value by ascertaining focal points for guard interval correlations at two different times, the change in the focal points of the guard interval correlations over time being used to obtained an estimated value for the deviation value.

2. Method according to Claim 1, wherein the deviation values are averaged over time in order to obtain the ascertained deviation value.

3. Synchronization unit for a multicarrier reception system having distributed pilot carriers for synchronizing a sampling clock using a deviation value, comprising:

   - a channel estimation unit (1) for performing channel estimation for the currently received OFDM, Orthogonal Frequency-Division Multiplex, symbol,
   - a phase difference signal unit (2) for ascertaining a phase difference signal Z,
   - an integration unit (5) for determining a first phase value from the phase difference signal Z by averaging over one or more frequencies in a first frequency group and for determining a second phase value from the phase difference signal Z by averaging over one or more frequencies in a second frequency group,
   - an estimator unit (8), comprising a phase calculation unit (6) and a phase subtractor (7) for ascertaining the deviation value from the difference between the first and second phase values;
   - a sampling clock correction unit (9) for adjusting the sampling clock on the basis of the deviation value,

   **characterized in that** a rough synchronization device is provided in order to perform rough synchronization for sampling clock deviations above a particular threshold deviation using an estimated deviation value, wherein the rough synchronization device is designed such that the deviation value for the rough synchronization is estimated by ascertaining the focal points of guard interval correlations at two different times, the focal points of the guard interval correlations being used to obtain an estimated value for the deviation value.

4. Synchronization unit according to Claim 3, wherein the phase difference signal unit (2) is designed such that the channel estimates of two successively received OFDM symbols are subjected to complex-conjugate multiplication.

5. Synchronization unit according to Claim 3 or 4, wherein the estimator unit (8) is designed such that the deviation value determined is a difference value from the first and second phase values.

6. Synchronization unit according to one of Claims 3 to 5, wherein the estimator unit (8) is designed such that the ascertained deviation values are averaged over time in order to obtain the ascertained deviation value.

**Revendications**

1. Procédé pour déterminer la valeur de l'écart d'une horloge de détection à partir d'un signal de réception multiplexé dans le temps sur une horloge de détection dans un système de réception multi-porteuse avec des porteuses pilotes réparties, pour la synchronisation, comprenant les étapes suivantes :

- réception successive de symboles OFDM (modulation de signaux par répartition en fréquences orthogonales),
- évaluation de la fonction de transfert de canal pour le symbole OFDM actuellement reçu à l'aide des porteuses pilotes réparties,
- multiplication complexe conjuguée des évaluations de canal de deux symboles OFDM reçus successivement, pour obtenir un signal de différence de phase (Z),
- détermination d'une première phase à partir du signal de différence de phase (Z) en faisant la moyenne sur une ou plusieurs fréquences d'un premier groupe de fréquences,
- détermination d'une seconde phase à partir du signal de différence (Z) en faisant la moyenne d'une ou plusieurs fréquences d'un second groupe de fréquences,
- détermination de l'écart entre la première et la seconde phase, cet écart étant la différence entre la première et la seconde phase,

**caractérisé en ce que**
l'on effectue une synchronisation grossière pour des écarts d'horloge de détection au-delà d'une certaine déviation par rapport à un seuil à l'aide d'une valeur d'écart évaluée, **en ce que** l'on détermine des centres de gravité des corrélations d'intervalles de garde à deux instants différents, et à partir de la variation en fonction du temps des centres de gravité des corrélations d'intervalles de garde, on récupère une évaluation de l'écart.

2. Procédé selon la revendication 1, selon lequel on fait la moyenne des écarts dans le temps pour obtenir un écart moyen.

3. Unité de synchronisation pour un système de réception multi-porteuse à porteuses pilotes réparties pour synchroniser une horloge de détection à l'aide d'un écart comprenant :

- une unité d'évaluation de canal (1) pour effectuer une évaluation de canal pour le symbole OFDM actuellement reçu (symbole de modulation de signaux par répartition en fréquences orthogonales),
- une unité d'un signal de différence de phase (2) pour déterminer un signal de différence de phase (Z),
- une unité d'intégration (5) pour déterminer une première phase à partir du signal de différence de phase (Z) en faisant la moyenne d'une ou plusieurs fréquences d'un premier groupe de fréquences et pour déterminer une seconde phase à partir du signal de différence de phase (Z) en faisant la moyenne d'une ou plusieurs fréquences d'un second groupe de fréquences,
- une unité d'évaluation (8) composée d'une unité de calcul de phase (6) ainsi que d'un générateur de différence de phase (7) pour déterminer l'écart à partir de la différence entre la première et la seconde phase,
- une unité de correction d'horloge de détection (9) pour régler l'horloge de détection en fonction de l'écart,

**caractérisée par**
une installation de synchronisation grossière pour effectuer une synchronisation grossière pour des écarts d'horloge de détection dépassant un seuil déterminé à l'aide d'un écart évalué, l'installation de synchronisation grossière étant conçue pour que l'évaluation de l'écart se fasse pour la synchronisation grossière en déterminant les centres de gravité des corrélations d'intervalles de garde à deux instants différents, et à partir des centres de gravité des corrélations d'intervalle de garde, on obtient une évaluation de l'écart.

4. Unité de synchronisation selon la revendication 3, dans laquelle

l'unité formant le signal de différence de phase (2) est conçue pour multiplier en mode complexe conjugué, les évaluations de canal de deux symboles OFDM reçus successivement.

5. Unité de synchronisation selon la revendication 3 ou 4,
selon laquelle
l'unité d'évaluation (8) est conçue pour déterminer comme écart, la différence entre la première et la seconde phase.

6. Unité de synchronisation selon l'une des revendications 1 à 5,
selon laquelle
l'unité d'évaluation (8) est conçue pour former la moyenne en fonction du temps des écarts déterminés pour obtenir l'écart moyen.

Fig. 1

$\tilde{H}_k(n)$

$Z_k(n)$

Fig. 3

ARCUS $\{Z_k(n)\}$

$K_2$

$K_1$

-N/2

N ζ/2

N/2

-N ζ/2

β

Subträger Index $n$

Träger (n)

negative Frequenzen : DC : positive Frequenzen

Symbole (k)

Fig. 2

Fig. 4

EP 1 643 707 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- ES 201980
- US 6577690 B1

- WO 9819410 A